# EUROPEAN PATENT SPECIFICATION

(11) **EP 1 513 722 B1**
(45) Date of publication and mention of the grant of the patent: **09.08.2006**
(21) Application number: 02741177.6
(22) Date of filing: 17.06.2002
(51) Int. Cl.: B63B 21/04

(54) **MOORING DAMPER**
HALTEVORRICHTUNG MIT DÄMPFER
AMORTISSEUR DE LIGNE DE MOUILLAGE

(43) Date of publication of application: 16.03.2005
(73) Proprietor: DOUGLAS MARINE S.R.L., I-20137 MILANO (IT)
(72) Inventor: DOUGLAS SCOTTI, Marino, Douglas Marine S.r.l., I-20137 Milano (IT)
(74) Representative: Vittorangeli, Lucia
(86) International application number: PCT/IT2002/000397
(87) International publication number: WO 2003/106251

(56) References cited:
- EP-A- 0 821 107
- EP-A- 0 900 723
- FR-A- 2 360 797
- US-A- 5 832 861
- US-B1- 6 190 091
- US-B1- 6 345 583

## Description

The subject of the present invention is a mooring damper of the type described in the preamble of claim 1.

The term "mooring damper" has been employed to indicate an accessory for boats, to be used between the mooring lines and the quay.

It is in fact known in the field that a boat moored to a quay is generally subjected to a wave-like motion which effects its movement away from and towards the mooring quay itself.

A need is therefore particularly felt to compensate the tensile forces which are generated on the mooring lines when the boat is in the phase of movement away from the quay, especially when such tensile forces are so sudden that they result in actual jerks on the mooring lines.

The aim of mooring dampers is precisely that of compensating for the tensile forces which are generated on the lines because of the wave-like motion which moves the boat away from the quay.

To satisfy the aforesaid requirement, mooring dampers are in fact known which compensate the tensile force acting on the mooring lines by means of the compression of a steel spring, the ends of which are rigidly connected respectively to the quay and to the line.

Such a mooring damper comprises a helical spring, a first end of which is connected, by means of metal rods within the spring itself, to a first ring disposed at the other end of the spring. In the same way, the other end of the spring is connected by means of metal rods within the spring itself to a second ring disposed on the same side as the first end of the spring. The ring and rods are generally produced in one piece, by suitably bending a steel rod.

The two rings are, for example, connected respectively to the quay and to the lines so that opposed tensile forces applied to the rings effect the compression of the helical spring, avoiding axial jerking of the lines.

A second type of mooring damper is known for example from US Patent 6.112.691 (corresponding to EP-A-1900723), in which the helical spring of the example mentioned above is replaced by a series of cup springs, made of synthetic material or rubber and arranged so that they are opposed, one with respect to the adjacent one.

In this case also, opposed tensile forces applied to the rings of the mooring damper bring about compression of the cup springs, preventing jerking of the line.

As is known, the examples of mooring dampers described above fulfil the aforesaid need to compensate for the tensile forces on the line, although it has been found that such solutions have some important drawbacks.

In both cases, one of the drawbacks mainly observed is the less than optimum ratio between the overall size of the damper and its rigidity. In fact, both in the case of the helical spring and that of the cup springs, to a high rigidity of the damper, which renders it suitable for the mooring of boats of large size, there corresponds a rather large bulk and therefore heavy weight of the damper itself.

To the above there are added main drawbacks of the individual embodiments illustrated previously.

In particular, the helical spring raises problems of particularly annoying creaking and noise, only partially solved by inserting a member made of synthetic material between the ends of the spring and the respective tie-rod.

The solution with cup springs, on the other hand, has important drawbacks which severely limit the functional character thereof. Each cup spring in fact has through seats for receiving the steel tie-rods which, by the effect of the sudden compression which the cup spring undergoes during operation, restrict their internal diameter, thus interfering with the respective tie-rod and generating friction, wear and damage, especially on the parts made of elastomeric material and/or rubber.

The aim of the present invention is that of devising and making available a mooring damper which makes it possible to fulfil the aforesaid requirement and to remedy some of the drawbacks mentioned with reference to the prior art.

This aim is fulfilled by means of a mooring damper of the type specified above, according to the characterising part of claim 1.

Further characteristics and advantages of the mooring damper according to the invention will become clear from the following description of some preferred exemplary embodiments, provided by way of non-limiting example with reference to the appended drawings, in which:

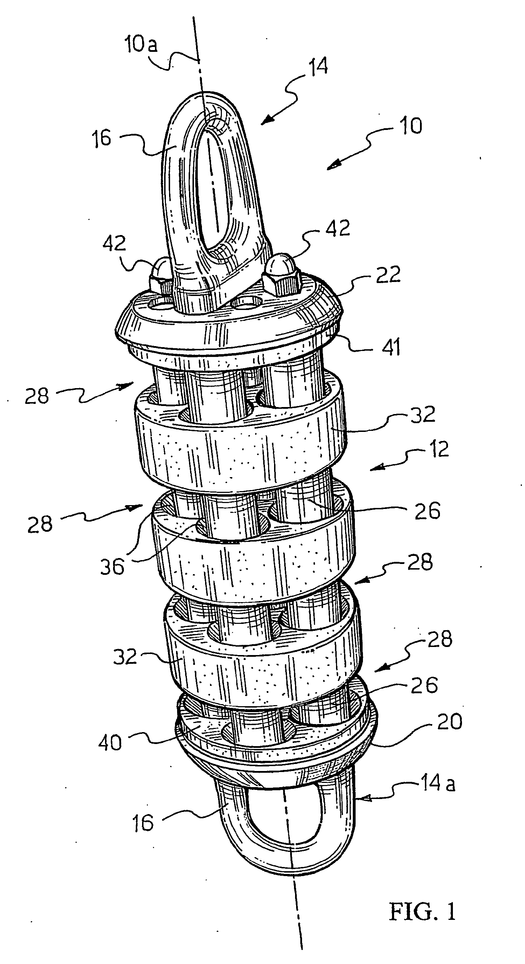

Figure 1 illustrates a perspective view of a mooring damper;

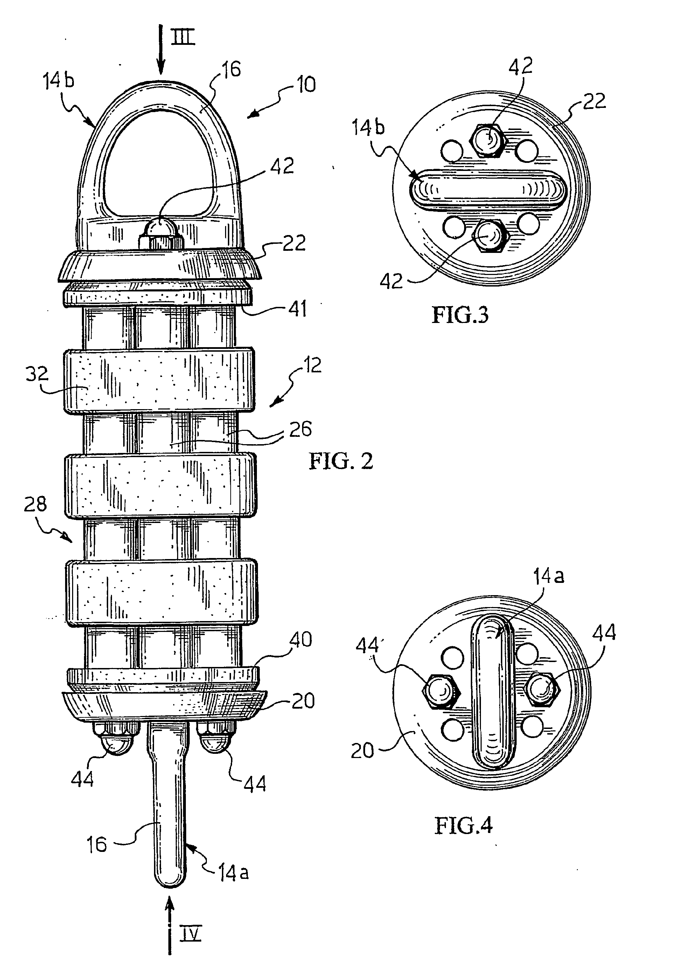

Figure 2 illustrates a side view of the mooring damper of Figure 1;
Figure 3 illustrates a view according to the arrow III of the damper of Figure 2;
Figure 4 illustrates a view according to the arrow IV of the damper of Figure 2;

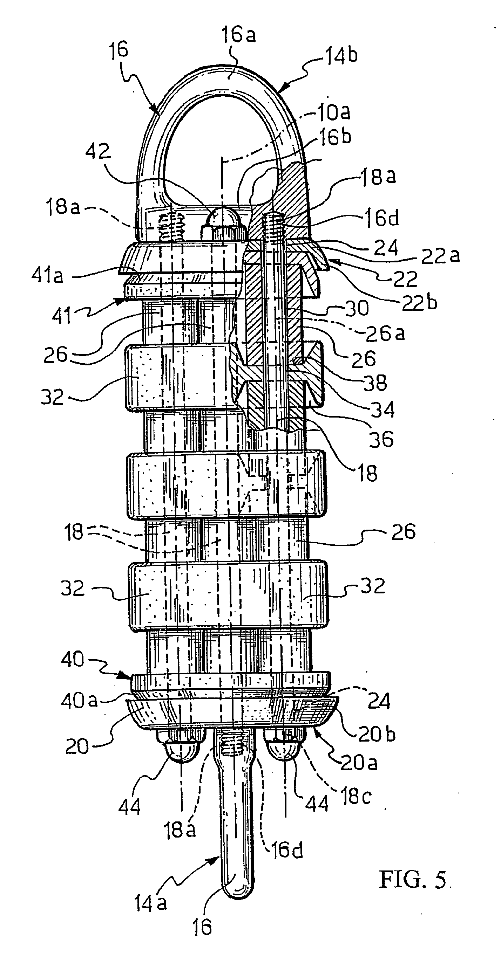

Figure 5 illustrates a side view, partially in section, of the damper of Figure 1;
Figure 6 illustrates a partially exploded view of the damper of Figure 1;
Figure 7 illustrates a perspective view of a detail of the damper of Figure 1;
Figure 8 illustrates a plan view of the detail of Figure 7;
Figure 9 illustrates a side view of the detail of Figure 7;
Figure 10 illustrates a partially exploded perspective view of a detail of the damper of Figure 1.

With reference to all the aforesaid drawings, a mooring damper is indicated as a whole by 10.

Such a damper is intended, for example, to be inserted between the mooring quay and the lines which end on the boat, in order to compensate for the tensile forces which are generated on the lines themselves when, owing to the wave-like motion, the boat is moved away from the quay in a more or less sudden manner.

From the appended drawings it is possible to see an example of a damper according to the present invention which develops along a longitudinal axis 10a and comprises resilient means 12 operably associated with two opposed tie-rods 14a and 14b.

The arrangement of the resilient means and the tie-rods is such that the tensile forces which act in the direction of the axis 10a on the two opposed tie-rods generate compression of the resilient means 12.

To this end, each tie-rod 14a and 14b comprises a ring portion 16 intended, for example, to be connected, in the case of a first tie-rod 14a, to the mooring line, and in the case of the other tie-rod 14b, to the quay. In this way, the damper in question is inserted between the quay and the boat so as to compensate for the more or less sudden tensile forces which would otherwise come to bear on the lines, risking damage to them.

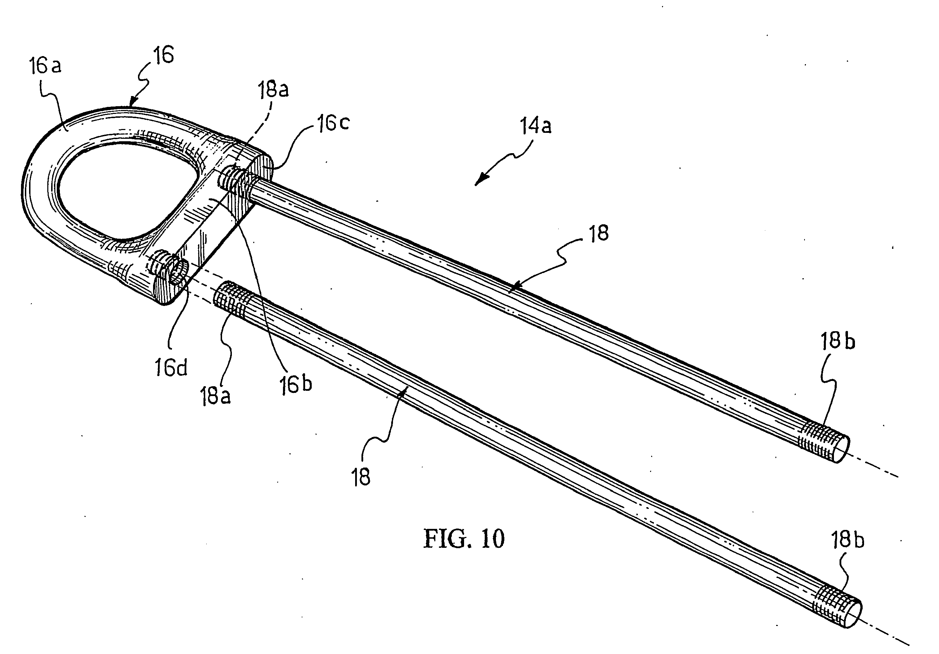

According to one possible embodiment illustrated for example in Figure 10, each tie-rod 14a and 14b is advantageously made of steel as three separate members. One of the three members consists of the ring portion 16 which defines a closed ring and comprises an arcuate section 16a and a straight section 16b. The straight section 16b has a flat outer surface 16c and two screw-threaded seats 16d.

The other two members of each tie-rod 14a and 14b consist of rods 18 of cylindrical shape having externally screw-threaded ends 18a and 18b.

Figure 10 illustrates one of the tie-rods, for example that indicated by the reference 14a, partially assembled, that is, in which the end 18a of one of the rods 18 has been screwed into one of the seats 16d of the ring portion 16. The other rod 18, instead, is in the phase of assembly of one of the tie-rods.

According to one possible embodiment, the damper 10 comprises a first reinforcing disk 20 and a second reinforcing disk 22. Preferably, the two reinforcing disks have a concave structure having a flat central wall 20a and 22a and an inclined peripheral rim 20b and 22b.

Each central wall 20a and 22a has a plurality of through seats, preferably cylindrical, generally indicated by the reference 24. Such seats are disposed, for example, at the corners of a quadrilateral, preferably a square.

The resilient means 12 of the damper 10 comprise a plurality of resilient members 26 structurally independent of one another, adapted to be compressively stressed in the direction of a longitudinal axis 26a thereof, for example intended to be disposed parallel to the longitudinal axis 10a of the damper 10. In particular, such resilient members 26 are grouped in at least one module 28 comprising a plurality of said structurally separate resilient members 26 disposed in parallel with one another, that is, with axes 26a parallel but not coinciding.

Preferably, the damper 10 has a plurality of modules 28 disposed in series along the longitudinal axis 10a of the damper.

The example illustrated in the drawings represents a possible embodiment of such resilient means 12. According to one possible embodiment, the resilient members 26 are produced by means of axially symmetrical, preferably cylindrical, structures made of elastomeric material and having a through seat 30 parallel to the respective longitudinal axis 26a. Such a seat 30 has transverse dimensions such as to receive the rods 18 of the tie-rods 14a and 14b.

According to one possible embodiment, the resilient members 26 are made of polyurethane elastomeric material.

According to one possible embodiment, illustrated for example in the drawings, each module 28 comprises four resilient members 26 disposed at the vertices of a quadrilateral, preferably a square, that is, disposed parallel to one another.

According to a further possible embodiment, also illustrated in the appended drawings, the damper 10 has four modules 28 disposed in series along the longitudinal axis 10a of the damper.

Spacers inserted between two adjacent modules 28 are indicated by 32. According to one possible embodiment, such spacers are made of synthetic material and have a symmetrical configuration with respect to a longitudinal axis 32a and with respect to a plane 32b perpendicular to said axis.

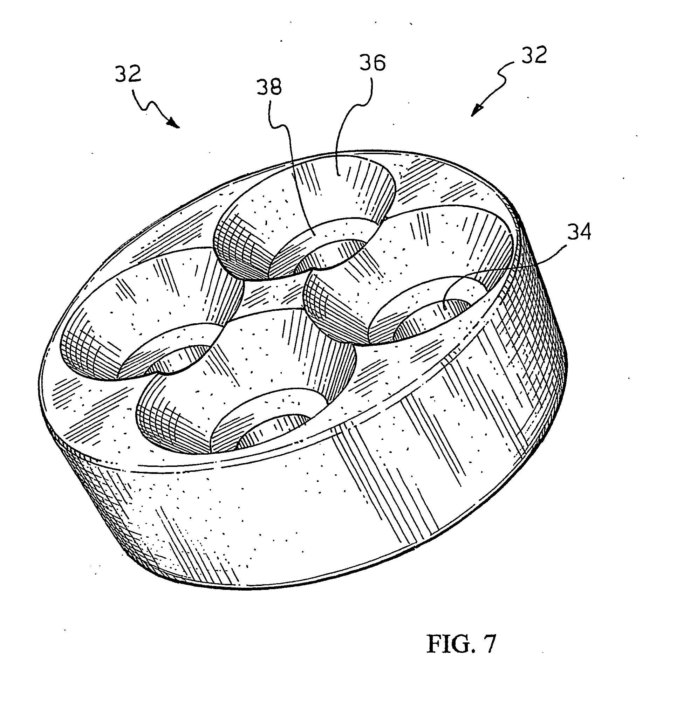

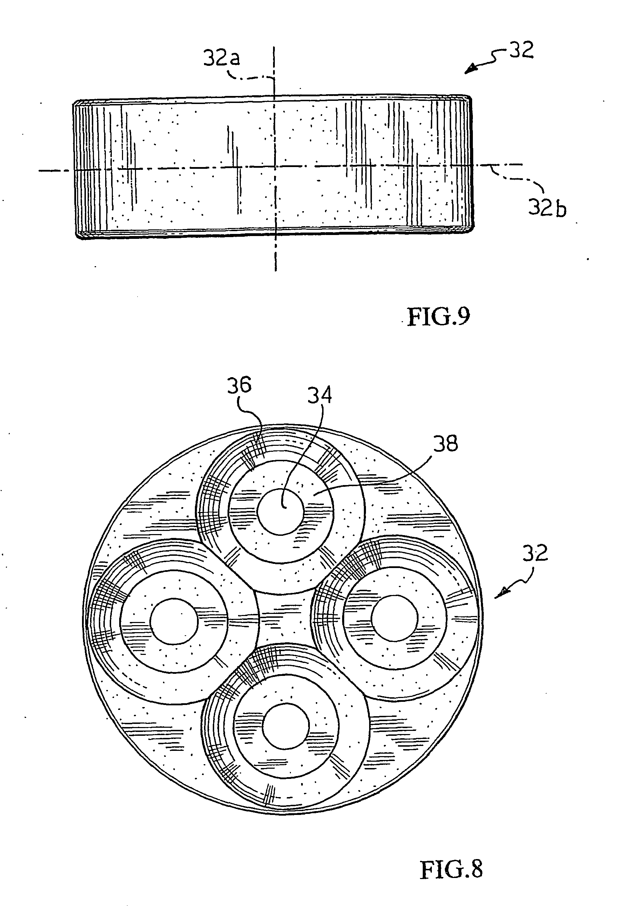

An example of such spacers is illustrated for example in Figures 7-9. The structure of such spacers is substantially cylindrical with respect to the longitudinal axis 32a and has four through holes 34 disposed at the vertices of a quadrilateral, preferably of a square.

According to one possible embodiment, at the through holes 34 and on both sides with respect to the plane of symmetry 32b, each spacer 32 has seats 36 of flared, preferably frustoconical, shape. The minor diameter of each seat 36 is preferably larger than the diameter of the through holes 34 so as to leave a bearing and dividing surface 38 for the resilient members 26 of adjacent modules.

The volume of the seats 36 is calculated according to the deformed volume of the resilient members 26 and their depth is such as to avoid the plastic, and therefore irreversible, deformation of the resilient members 26 as will be described hereinafter with reference to the functioning of the damper 20.

According to a further embodiment, in addition to what has been described above, two end spacers 40 and 41 may be provided, adapted to be inserted respectively between the reinforcing disks 20 and 22 and the end modules 28.

Such end spacers 40 and 41 have a structure substantially corresponding to one half of the spacers 32, hypothetically cut along the plane of symmetry 32b. In the example illustrated in the drawings, the end spacers 40 have a flared, preferably frustoconical, lateral wall 40a, 41a adapted to be received by the respective reinforcing disk 20, 22.

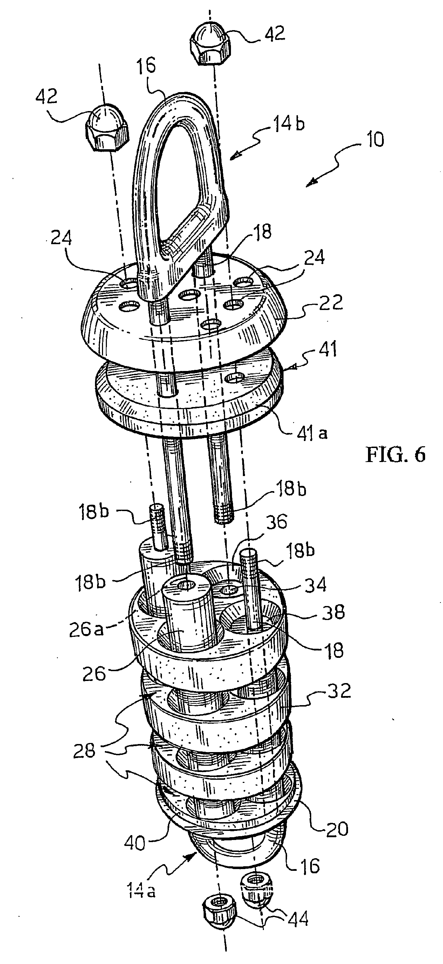

In the assembly of the damper 10, as illustrated for example in Figure 6, the first reinforcing disk 20 is inserted on the rods 18 of one of the tie-rods, for example that indicated by the reference 14a, preferably already assembled. In particular, the rods 18 are slidably inserted in opposed seats 24 of the first reinforcing disk 20 until the first reinforcing disk 20 abuts against the flat surface 16c of the ring portion 16.

In the case where it is provided, an end spacer 40 is slidably inserted on the rods 18 until it abuts against the first reinforcing disk 20.

Following this, a first module 28 is assembled, consisting for example of four resilient members 26 of cylindrical shape. Two resilient members 26 are inserted on the rods 18 while the other two resilient members 26 are simply placed in the seats 36 of the end spacer 40 which may be provided.

A spacer 32 is inserted on the rods 18 until it abuts against the resilient members 26 already assembled.

By alternating a module 28 and a spacer 32, the length of the damper 10 is completed. If it is provided, before the second reinforcing disk 22 there is inserted one of the end spacers, for example that indicated by the reference 41.

The rods 18 protrude from the second reinforcing disk 22 by their screw-threaded end 18b onto which nuts 42 are screwed.

The other tie-rod, for example that indicated by the reference 14b, is threaded with the respective rods 18 in the free seats 24 of the second reinforcing disk 22 and gradually in the free through holes 34 of the spacers 32 and in the free seats 30 of the resilient members 26, until the respective screw-threaded ends 18b protrude from the first reinforcing disk 20. Further nuts 44 are screwed onto the screw-threaded ends 18b to complete the assembly of the damper 10.

A description is given below of the method of use of the damper 10 described above.

During use, the damper 10 is inserted, for example, between the quay and the mooring lines of a boat. A ring portion 16 of one of the two tie-rods is connected to the quay while the ring portion 16 of the other tie-rod is connected to the mooring lines of the boat.

When there is a movement of the boat away from the quay which would tend to exert tension more or less suddenly on the mooring lines, the opposed tensile forces applied to the two ring portions 16 of the two tie-rods 14a and 14b bring about compression of the resilient means 12 and are consequently compensated for.

In fact, the opposed tensile forces applied to the ring portions 16 tend to move the latter away and to bring closer the first and second reinforcing disks 20, 22, compressing the resilient members 26. At the same time, the first reinforcing disk 20 can slide with respect to the rods 18 of the first tie-rod 14a while the second reinforcing disk 22 can slide with respect to the rods 18 of the second tie-rod 14b.

Each resilient member 26 is structurally separate from the others and works only during compression. This allows the resilient member to deform uniformly towards the outside, avoiding friction with the respective rod 18. This makes it possible to avoid wear and damage, in particular of the resilient members 26.

A particularly advantageous embodiment of the resilient members 26, such as to obtain an optimum result of deformation of each individual member, is that in which the height of the resilient member 26 does not exceed twice the respective outside diameter.

The provision of a plurality of resilient members in parallel to form a module 28 and the possibility of disposing a plurality of modules in series makes it possible to produce various ranges of rigidity of the damper, in order to obtain even very high degrees of rigidity without however increasing the overall dimensions and the weight too much.

The presence of spacers makes it possible to maintain the different modules 28 separate from one another, and the presence of the seats 36 makes it possible to keep the resilient members 26 aligned and guided in each working phase of the damper. In particular, the height of the seats 36, their shape, particularly frustoconical shape, and their volume make it possible to avoid permanent deformation of the resilient members 26. In fact, when the spacers 32 are stacked, that is, in contact, the deformed resilient members 26 occupy the free volume of the seats 36 but are still in the resilient phase. The spacers 32 therefore produce ends of stroke which prevent the irreversible plastic deformation of the resilient members 26.

In addition to that, the provision of a tie-rod as three separate members makes it possible to simplify both its production and the steps of assembly of the damper. In fact, the bending of the rod to form the tie-rod does not allow optimum results since the length of the two rods must often be adjusted. Moreover, the known tie-rods obtained by bending a steel rod and then produced in one piece have a residual resilience which keeps the two rods 18 spread apart.

Consequently in order to assemble the damper 10 the two rods 18 must be placed alongside each other so as to be parallel, requiring increasing forces as the dimensions increase.

The advantageous provision of a tie-rod produced as three members not only solves the aforesaid problems of production and assembly, but further makes it possible to obtain tie-rods that are stronger and more compact, especially in the ring portion 16.

The provision in addition of a ring portion 16 produced in the form of a closed ring with a flat surface 16c adapted to abut against the reinforcing disks makes it possible to obtain a more compact and stronger structure.

A further advantage of the damper according to the invention lies in the unusual structural simplicity thereof, which enables it to be produced at a very limited cost.

It is clear that variants and/or additions to what has been described above and illustrated may be provided.

As an alternative to what is shown in the drawings, the resilient members may be different in shape, number and dimensions, like the respective modules.

The spacers may also be different in shape, number and dimensions, like the respective seats 36.

For example, the spacers may not be symmetrical with respect to the plane 32a or with respect to the longitudinal axis.

The tie-rods may also be produced differently, for example in a single piece as provided for by the prior art previously described. Moreover, they may if necessary be produced in three parts also in dampers different from that according to the present invention.

To the preferred solution of embodiment of the damper described above, an expert in the field, for the purpose of fulfilling contingent and specific requirements, may apply numerous modifications, adaptations and substitutions of members with other functionally equivalent members, without however departing from the scope of the following claims.

## Claims

1. A mooring damper (10) comprising resilient means (12) operably associated with two tie-rods (14a, 14b) whereby said resilient means (12) comprise a plurality of resilient members (26) structurally independent of one another, adapted to be compressively stressed in the direction of a longitudinal axis (26a) thereof, said resilient members (26) being grouped in parallel in at least one module (28) comprising a plurality of said structurally separate resilient members (26), **characterized in that** said resilient member (26) of at least one module (28) are disposed in parallel with one another with distinct axes (26a) parallel to the axes of the tie rods (14a, 14b).

2. A mooring damper (10) according to claim 1 , wherein a plurality of modules (28) are provided, disposed in series along a longitudinal axis (10a) of the damper.

3. A mooring damper (10) according to one of the preceding claims, wherein said resilient members (26) are produced by means of structures axially symmetrical with respect to their own longitudinal axis (26a).

4. A mooring damper (10) according to claim 3, wherein said resilient members (26) are cylindrical members.

5. A mooring damper (10) according to one of the preceding claims, wherein said resilient members (26) are made of elastomeric material.

6. A mooring damper (10) according to claim 5, wherein said resilient members (26) are made of polyurethane elastomeric material.

7. A mooring damper (10) according to one of the preceding claims, wherein said resilient members (26) have a through seat (30) parallel to the respective longitudinal axis (26a).

8. A mooring damper (10) according to claim 7, wherein said seat (30) has transverse dimensions such as to receive rods (18) of the tie-rods (14a, 14b).

9. A mooring damper (10) according to one of the preceding claims, wherein said resilient members (26) have a height along the longitudinal axis (26a) of no more than twice the respective transverse dimension.

10. A mooring damper (10) according to one of the preceding claims, wherein each module (28) comprises four resilient members (26) disposed at the vertices of a quadrilateral, preferably a square.

11. A mooring damper (10) according to claim 2, wherein four modules (28) are provided, disposed in series along the longitudinal axis (10a) of the damper.

12. A mooring damper (10) according to one of the preceding claims, wherein spacers (32) are provided, inserted between two adjacent modules (28).

13. A mooring damper (10) according to claim 12, wherein said spacers (32) are made of synthetic material.

14. A mooring damper (10) according to claim 12, wherein said spacers (32) have a symmetrical configuration with respect to a longitudinal axis (32a).

15. A mooring damper (10) according to claim 12, wherein said spacers (32) have a symmetrical configuration with respect to a plane (32b) perpendicular to a longitudinal axis (32a).

16. A mooring damper (10) according to one of claims 12 to 15, wherein said spacers (32) have through holes (34) disposed at the vertices of a quadrilateral, preferably of a square.

17. A mooring damper (10) according to one of claims 12 to 16, wherein each spacer (32) has seats (36) of flared, preferably frustoconical, shape.

18. A mooring damper (10) according to claims 16 and 17, wherein the minor diameter of each seat (36) is larger than the diameter of the through holes (34) defining a bearing and dividing surface (38) for the resilient members (26) of adjacent modules (28).

19. A mooring damper according to claim 17 or 18, wherein the volume of the seats (36) is calculated according to the deformed volume of the resilient members (26).

20. A mooring damper (10) according to one of claims 17 to 19, wherein the depth of the seats (36) is such as to avoid the plastic, and therefore irreversible, deformation of the resilient members (26).

21. A mooring damper (10) according to any one of the preceding claims, wherein at least one end spacer (40, 41) is provided.

22. A mooring damper (10) according to claim 21, wherein said end spacers (40, 41) have a flared, preferably frustoconical, lateral wall (40a).

23. A mooring damper (10) according to one of the preceding claims, wherein a first reinforcing disk (20) and a second reinforcing disk (22) are provided.

24. A mooring damper (10) according to claim 23, wherein said reinforcing disks (20, 22) have a concave structure having a flat central wall (20a, 22a) and an inclined peripheral rim (20b, 22b).

25. A mooring damper (10) according to claim 24, wherein said central wall (20a, 22a) has through seats (24).

26. A mooring damper (10) according to claim 25, wherein said through seats (24) are disposed at the corners of a quadrilateral, preferably a square.

27. A mooring damper (10) according to one of the preceding claims, wherein said tie-rod (14a, 14b) comprises a ring portion (16) structurally separate from two rods (18).

28. A mooring damper (10) according to claim 27, wherein said ring portion (16) defines a closed ring and comprises an arcuate section (16a) and a straight section (16b).

29. A mooring damper (10) according to claim 28, wherein said straight section (16b) has a flat outer surface (16c) and two screw-threaded seats (16d).

## Patentansprüche

1. Befestigungsdämpfer (10) umfassend eine elastische Einrichtung (12), die funktionsfähig mit zwei Zugstangen (14a, 14b) verbunden ist, wobei die elastische Einrichtung (12) eine Vielzahl von strukturell voneinander unabhängigen elastischen Elementen (26) umfasst, die ausgelegt sind, um durch Druck in der Richtung einer Längsachse (26a) davon belastet zu werden, wobei die elastischen Elemente (26) parallel in zumindest einem Modul (28) zusammengefasst sind, welches eine Vielzahl der strukturell getrennten elastischen Elemente (26) umfasst, **dadurch gekennzeichnet, dass** die elastischen Elemente (26) des zumindest einen Moduls (28) parallel zueinander mit verschiedenen Achsen (26a) parallel zu den Achsen der Zugstangen (14a, 14b) angeordnet sind.

2. Befestigungsdämpfer (10) nach Anspruch 1, wobei eine Vielzahl von Modulen (28) vorgesehen ist, die in Reihe entlang einer Längsachse (10a) des Dämpfers angeordnet sind.

3. Befestigungsdämpfer (10) nach einem der vorhergehenden Ansprüche, wobei die elastischen Elemente (26) mittels Strukturen, die axial symmetrisch in Bezug auf ihre eigenen Längsachsen (26a) sind, erzeugt werden.

4. Befestigungsdämpfer (10) nach Anspruch 3, wobei die elastischen Elemente (26) zylindrische Elemente sind.

5. Befestigungsdämpfer (10) gemäß einem der vorhergehenden Ansprüche, wobei die elastischen Elemente (26) aus Elastomer-Material gefertigt sind.

6. Befestigungsdämpfer (10) nach Anspruch 5, wobei die elastischen Elemente (26) aus Polyurethan-Elastomer-Material gefertigt sind.

7. Befestigungsdämpfer (10) nach einem der vorhergehenden Ansprüche, wobei die elastischen Elemente (26) eine durchgehende Aufnahme (30) parallel zu der entsprechenden Längsachse (26a) aufweisen.

8. Befestigungsdämpfer (10) nach Anspruch 7, wobei die Aufnahme (30) Querabmessungen aufweist, um die Stangen (18) der Zugstangen (14a, 14b) aufzunehmen.

9. Befestigungsdämpfer (10) nach einem der vorhergehenden Ansprüche, wobei die elastischen Elemente (26) eine Höhe entlang der Längsachse (26a) aufweisen, die nicht mehr als das Zweifache der entsprechenden Querabmessung beträgt.

10. Befestigungsdämpfer (10) nach einem der vorhergehenden Ansprüche, wobei jedes Modul (28) vier elastische Elemente (26) umfasst, welche an den Eckpunkten eines Vierecks, vorzugsweise eines Quadrats, angeordnet sind.

11. Befestigungsdämpfer (10) nach Anspruch 2, wobei vier Module (28) vorgesehen sind, die in Reihe entlang der Längsachse (10a) des Dämpfers angeordnet sind.

12. Befestigungsdämpfer (10) nach einem der vorhergehenden Ansprüche, wobei Abstandshalter (32) vorgesehen sind, die zwischen zwei benachbarten Modulen (28) eingesetzt sind.

13. Befestigungsdämpfer (10) nach Anspruch 12, wobei die Abstandshalter (32) aus einem synthetischen Material gefertigt sind.

14. Befestigungsdämpfer (10) nach Anspruch 12, wobei die Abstandshalter (32) eine symmetrische Konfiguration in Bezug auf eine Längsachse (32a) aufweisen.

15. Befestigungsdämpfer (10) nach Anspruch 12, wobei die Abstandshalter (32) eine symmetrische Konfiguration in Bezug auf eine Ebene (32b) senkrecht zu einer Längsachse (32a) aufweisen.

16. Befestigungsdämpfer (10) nach einem der Ansprüche 12 bis 15, wobei die Abstandshalter (32) Durchgangslöcher (34) aufweisen, die an den Eckpunkten eines Vierecks, vorzugsweise eines Quadrats, angeordnet sind.

17. Befestigungsdämpfer (10) nach einem der Ansprüche 12 bis 16, wobei jeder Abstandshalter (32) Aufnahmen (36) mit einer konisch erweiterten, vorzugsweise kegelstumpfförmigen, Form aufweist.

18. Befestigungsdämpfer (10) nach Ansprüchen 16 und 17, wobei der kleinere Durchmesser jeder Aufnahme (36) größer als der Durchmesser der Durchgangslöcher (34) ist, welche eine Lager- und Teilungsoberfläche (38) für die elastischen Elemente (26) der benachbarten Module (28) definieren.

19. Befestigungsdämpfer (10) nach Anspruch 17 oder 18, wobei das Volumen der Aufnahmen (36) gemäß dem verformten Volumen der elastischen Elemente (26) berechnet wird.

20. Befestigungsdämpfer (10) nach einem der Ansprüche 17 bis 19, wobei die Tiefe der Aufnahmen (36) derart ist, dass die plastische, und somit irreversible, Verformung der elastischen Elemente (26) vermieden wird.

21. Befestigungsdämpfer (10) nach einem der vorhergehenden Ansprüche, wobei zumindest ein End-Abstandshalter (40, 41) vorgesehen ist.

22. Befestigungsdämpfer (10) nach Anspruch 21, wobei die End-Abstandshalter (40, 41) eine konisch erweiterte, vorzugsweise kegelstumpfförmige, Seitenwand (40a) aufweisen.

23. Befestigungsdämpfer (10) nach einem der vorhergehenden Ansprüche, wobei eine erste Verstärkungsscheibe (20) und eine zweite Verstärkungsscheibe (22) vorgesehen sind.

24. Befestigungsdämpfer (10) nach Anspruch 23, wobei die Verstärkungsscheiben (20, 22) einen konkaven Aufbau mit einer flachen Mittelwand (20a, 22a) und einem geneigten Umfangsrand (20b, 22b) aufweisen.

25. Befestigungsdämpfer (10) nach Anspruch 24, wobei die Mittelwand (20a, 22a) durchgehenden Aufnahmen (24) aufweist.

26. Befestigungsdämpfer (10) nach Anspruch 25, wobei die durchgehenden Aufnahmen (24) an den Ecken eines Vierecks, vorzugsweise eines Quadrats, angeordnet sind.

27. Befestigungsdämpfer (10) nach einem der vorhergehenden Ansprüche, wobei die Zugstange (14a, 14b) einen Ringbereich (16) umfasst, der strukturell von den zwei Stangen (18) getrennt ist.

28. Befestigungsdämpfer (10) nach Anspruch 27, wobei der Ringbereich (16) einen geschlossenen Ring definiert und einen gebogenen Abschnitt (16a) und einen geraden Abschnitt (16b) umfasst.

29. Befestigungsdämpfer (10) nach Anspruch 28, wobei der gerade Abschnitt (16b) eine flache Außenoberfläche (16c) und zwei Aufnahmen mit Schraubengewinde (16d) aufweist.

## Revendications

1. Amortisseur de ligne de mouillage (10) comprenant des moyens élastiques (12) fonctionnellement associés à deux tirants (14a, 14b) dans lequel lesdits moyens élastiques (12) comprennent une pluralité d'éléments élastiques (26) structurellement indépendants les uns des autres, adaptés pour être pressés par force de compression dans la direction d'un axe longitudinal (26a) de ceux-ci, lesdits éléments élastiques (26) étant groupés parallèlement dans au moins un module (28) comprenant une pluralité desdits éléments élastiques (26) structurellement séparés, **caractérisé en ce que** lesdits éléments élastiques (26) d'au moins un module (28) sont disposés parallèlement les uns aux autres avec des axes distincts (26a) parallèles aux axes des tirants (14a, 14b).

2. Amortisseur de ligne de mouillage (10) selon la revendication 1, dans lequel une pluralité de modules (28) sont prévus, disposés en série le long d'un axe longitudinal (10a) de l'amortisseur.

3. Amortisseur de ligne de mouillage (10) selon l'une des revendications précédentes, dans lequel lesdits éléments élastiques (26) sont produits au moyen de structures axialement symétriques par rapport à leur propre axe longitudinal (26a).

4. Amortisseur de ligne de mouillage (10) selon la revendication 3, dans lequel lesdits éléments élastiques (26) sont des éléments cylindriques.

5. Amortisseur de ligne de mouillage (10) selon l'une des revendications précédentes, dans lequel lesdits éléments élastiques (26) sont constitués d'un matériau élastomère.

6. Amortisseur de ligne de mouillage (10) selon la revendication 5, dans lequel lesdits éléments élastiques (26) sont constitués d'un matériau élastomère de polyuréthane.

7. Amortisseur de ligne de mouillage (10) selon l'une des revendications précédentes, dans lequel lesdits éléments élastiques (26) ont un siège de passage (30) parallèle à l'axe longitudinal respectif (26a).

8. Amortisseur de ligne de mouillage (10) selon la revendication 7, dans lequel ledit logement (30) a des dimensions transversales de manière à recevoir des tiges (18) des tirants (14a, 14b).

9. Amortisseur de ligne de mouillage (10) selon l'une des revendications précédentes, dans lequel lesdits éléments élastiques (26) ont une hauteur le long de l'axe longitudinal (26a) ne dépassant pas deux fois la dimension transversale respective.

10. Amortisseur de ligne de mouillage (10) selon l'une des revendications précédentes, dans lequel chaque module (28) comprend quatre éléments élastiques (26) disposés aux sommets d'un quadrilatère, de préférence un carré.

11. Amortisseur de ligne de mouillage (10) selon la revendication 2, dans lequel quatre modules (28) sont prévus, disposés en série le long de l'axe longitudinal (10a) de l'amortisseur.

12. Amortisseur de ligne de mouillage (10) selon l'une des revendications précédentes, dans lequel des espaceurs (32) sont prévus, insérés entre deux modules adjacents (28).

13. Amortisseur de ligne de mouillage (10) selon la revendication 12, dans lequel lesdits espaceurs (32) sont constitués d'un matériau synthétique.

14. Amortisseur de ligne de mouillage (10) selon la revendication 12, dans lequel lesdits espaceurs (32) ont une configuration symétrique par rapport à un axe longitudinal (32a).

15. Amortisseur de ligne de mouillage (10) selon la revendication 12, dans lequel lesdits espaceurs (32) ont une configuration symétrique par rapport à un plan (32b) perpendiculaire à un axe longitudinal (32a).

16. Amortisseur de ligne de mouillage (10) selon l'une des revendications 12 à 15, dans lequel lesdits espaceurs (32) comportent des orifices de passage traversants (34) disposés aux sommets d'un quadrilatère, de préférence un carré.

17. Amortisseur de ligne de mouillage (10) selon l'une des revendications 12 à 16, dans lequel chaque espaceur (32) comporte des sièges (36) d'une forme évasée, de préférence tronconique.

18. Amortisseur de ligne de mouillage (10) selon les revendications 16 et 17, dans lequel le diamètre intérieur de chaque logement (36) est supérieur au diamètre des orifices de passage (34) définissant un palier et une surface de division (38) pour les éléments élastiques (26) de modules adjacents (28).

19. Amortisseur de ligne de mouillage selon la revendication 17 ou 18, dans lequel le volume des sièges (36) est calculé en fonction du volume déformé des éléments élastiques (26).

20. Amortisseur de ligne de mouillage (10) selon l'une des revendications 17 à 19, dans lequel la profondeur des sièges (36) est de manière à éviter la déformation plastique, et donc irréversible, des éléments élastiques (26).

21. Amortisseur de ligne de mouillage (10) selon l'une quelconque des revendications précédentes, dans lequel au moins un espaceur d'extrémité (40, 41) est prévu.

22. Amortisseur de ligne de mouillage (10) selon la revendication 21, dans lequel lesdits espaceurs d'extrémité (40, 41) ont une paroi latérale (40a) évasée, de préférence tronconique.

23. Amortisseur de ligne de mouillage (10) selon l'une des revendications précédentes, dans lequel un premier disque de renfort (20) et un second disque de renfort (22) sont prévus.

24. Amortisseur de ligne de mouillage (10) selon la revendication 23, dans lequel lesdits disques de renfort (20, 22) ont une structure concave ayant une paroi centrale plate (20a, 22a) et une couronne périphérique inclinée (20b, 22b).

25. Amortisseur de ligne de mouillage (10) selon la revendication 24, dans lequel ladite paroi centrale (20a, 22a) comporte des sièges de passage traversant (24).

26. Amortisseur de ligne de mouillage (10) selon la revendication 25, dans lequel lesdits sièges de passage (24) sont disposés aux coins d'un quadrilatère, de préférence un carré.

27. Amortisseur de ligne de mouillage (10) selon l'une des revendications précédentes, dans lequel ledit tirant (14a, 14b) comprend une partie d'anneau (16) structurellement séparée de deux tiges (18).

28. Amortisseur de ligne de mouillage (10) selon la revendication 27, dans lequel ladite partie d'anneau (16) définit un anneau fermé et comprend une partie arquée (16a) et une partie droite (16b).

29. Amortisseur de ligne de mouillage (10) selon la revendication 28, dans lequel ladite partie droite (16b) comporte une surface extérieure plate (16c) et deux sièges à filetage à vis (16d).
